Europäisches Patentamt

European Patent Office

Office européen des brevets

(11) Numéro de publication: **0 028 729**
**B1**

(12) **FASCICULE DE BREVET EUROPEEN**

(45) Date de publication du fascicule du brevet: **12.09.84**

(51) Int. Cl.³: **B 32 B 31/00,** B 32 B 5/22, B 32 B 19/02

(21) Numéro de dépôt: **80106332.2**

(22) Date de dépôt: **17.10.80**

(54) **Procédé de réalisation en continu, par technique papetière, de bandes minces poreuses et produits obtenus.**

(30) Priorité: **18.10.79 FR 7925878**

(43) Date de publication de la demande:
**20.05.81 Bulletin 81/20**

(45) Mention de la délivrance du brevet:
**12.09.84 Bulletin 84/37**

(84) Etats contractants désignés:
**BE CH DE FR GB IT LI LU NL SE**

(56) Documents cités:
**FR-A-2 025 392**
**FR-A-2 143 593**
**FR-E- 87 730**
**GB-A- 836 457**
**US-A-3 269 889**
**US-A-3 348 974**
**US-A-3 854 994**
**US-A-3 960 601**
**US-A-4 111 155**
**US-A-4 166 143**

(73) Titulaire: **SOCIETE GENERALE DE CONSTRUCTIONS ELECTRIQUES ET MECANIQUES "ALSTHOM et Cie" Société en nom collectif dite**
**38, Avenue Kléber**
**F-75784 Paris Cedex 16 (FR)**

(72) Inventeur: **Lambert, Claude**
**16, Allée des Thuyas**
**F-91240 Saint Michel sur Orge (FR)**
Inventeur: **Tissier, Alexis**
**62, rue des Chênes verts**
**F-91240 Saint Michel sur Orge (FR)**

(74) Mandataire: **Weinmiller, Jürgen**
**Zeppelinstrasse 63**
**D-8000 München 80 (DE)**

Courier Press, Leamington Spa, England.

EP 0 028 729 B1

## Description

La présente invention concerne un procédé de fabrication de bandes minces, poreuses, conductrices, en continu, notamment par une technique papetière.

Elle vise également le produit obtenu en mettant en oeuvre ledit procédé, notamment des électrodes à base de carbone pour piles à combustible.

Il est connu par exemple à partir du document US—A 3 960 601 de réaliser des bandes poreuses, par une technique papetière, ces bandes comportant des fibres telles que des fibres de carbone. Un mélange de ces fibres avec un liant et de l'eau est étalé sur une bande transporteuse puis séché et chauffé à une température qui établit une cohésion des fibres entre elles. Un procédé similaire pour la réalisation de bandes minces est décrit dans le document FR—A 2 025 392. La cohésion y est obtenue par l'adjonction de fibres cellulosiques et/ou l'interposition d'un tamis métallique.

L'invention vise un procédé simple de réalisation de bandes poreuses multicouches à fibres de carbone de faible épaisseur par la technique papetière. L'extension de l'enseignement selon ledit document US à des bandes multicouches ne conduit pas à un tel procédé simple, car il faudrait un traitement thermique de la première couche avant le dépôt de la deuxième couche sur la première.

L'invention a donc pour objet un procédé de fabrication en continu de bandes minces, poreuses, conductrices comportant au moins deux couches à base de fibres de carbone, l'une des couches au moins comportant en plus un élément d'activation catalytique, caractérisé par le fait qu'on prépare une dispersion aqueuse très diluée de fibres de carbone, on ajoute à cette dispersion une émulsion aqueuse d'un liant, on initie la précipitation d'une partie dudit liant sur lesdites fibres, on étale ce mélange sous forme d'un première couche, on étale sur cette première couche au moins une deuxième couche obtenue comme la première couche, mais qui contient en plus un élément d'activation catalytique, on élimine au moins une partie de l'eau du mélange, on sèche, et on effectue la mise à l'épaisseur désirée de la bande par passage entre deux rouleaux.

De préférence, ladite couche comporte une proportion pondérale dudit liant comprise entre 20 et 99% et de préférence entre 70 et 95%.

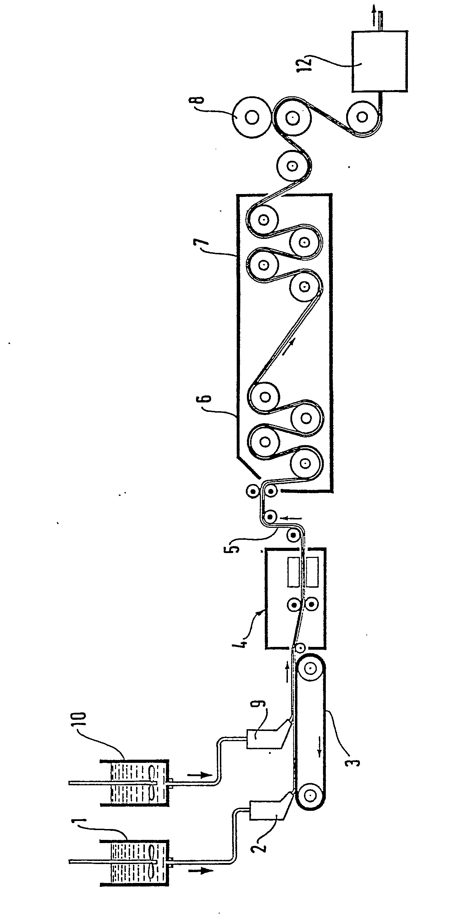

L'invention sera décrite ci-après en détail à l'aide d'un exemple de réalisation purement illustratif mais nullement limitatif en référence à l'unique figure annexée qui représente très schématiquement une machine utilisée pour la mise en oeuvre du procédé selon l'invention.

Le produit de départ est d'une une dispersion dans de l'eau de fibres de carbone ou de graphite et d'autre part une émulsion aqueuse d'un liant tel que le polytétrafluoréthylène (PTFE) ou le chlorure de polyvinyle.

Ladite dispersion comporte sensiblement 1/1000 en poids de fibres.

L'émulsion aqueuse de liant est par exemple une émulsion de PTFE renfermant en poids environ 40% de PTFE. On dilue cette émulsion jusqu'à ce que sa teneur en extrait sec soit de l'ordre de 5/1000 environ.

En se référant à la figure annexée, on a représenté en 1 un récipient dans lequel on réalise au préalable le mélange de la dispersion de fibres et carbone ou de graphite et de l'émulsion de liant.

On initie alors la précipitation d'une partie du liant sur les fibres, soit par agitation mécanique, soit par addition de cations, notamment le cation Al$^{3+}$, soit par chauffage à une température de 25 à 30°C environ.

Un tel mélange est alors transféré à un dispositif d'alimentation 2, acheminé, puis étalé sur une table filtrante 3 de la machine papetière. On prévoit un deuxième dispositif d'alimentation 9 en aval du premier alimenté par un mélange de fibres et d'un élément d'activation catalytique avec une émulsion de liant convenable contenue dans un deuxième récipient 10. Sur la table filtrante 3 il y a tout d'abord une première élimination d'eau par gravité suivie d'une deuxième élimination par un dispositif d'aspiration (non représenté); il en résulte la formation d'une bande 5 présentant une excellente cohésion et une bonne tenue mécanique dont une partie de l'eau résiduelle est éliminée dans une section des presses 4, la bande 5 étant alors acheminée dans deux séchoirs successifs 6 et 7 où la presque totalité de l'eau disparaît. Enfin la bande est mise à l'épaisseur désirée par passage à froid entre deux rouleaux 8.

Eventuellement elle est acheminée vers un four 12 où le frittage du PTFE peut être effectué.

On obtient donc une bande très mince et cohérente, à porosité ajustable, à conductibilité électronique élevée, et cela en utilisant un taux de fibres de carbone peu élévé tout en présentant une bonne résistance mécanique.

L'eau est le seul liquide utilisé dans le milieu dispersif, lequel renferme un produit hydrophobe, en l'occurrence le PTFE ou éventuellement le PVC.

L'ajustement de l'épaisseur peut être effectué en jouant uniquement sur la distance mutuelle des rouleaux 8 sans aucun chauffage. La porosité peut être de même ajustée par simple réglage du dèbit de dispersion et de la vitesse de rotation des cylindres 8, sans utilisation de produits porophores.

La mise en oeuvre d'un liant tel que le PTFE ou le PVC permet précisément de réaliser à température ambiante toutes ces opérations, et celà sans briser les fibres de carbone, lesquelles présentent une longueur de 1 à 5 mm et un diamètre de 8 à 12 microns.

Une autre caractéristique importante de l'invention découle du fait que la bande 5 présente même à l'état humide une bonne cohésion ce qui permet, comme exposé ci-dessus, de l'utiliser comme support pour d'autres couches successives de composition et de propriétés différentes, élaborées d'ailleurs en même temps, ces couches étant elles-mêmes très minces, soit une épaisseur inférieure à 20 microns.

On va donc décrire à titre d'exemple nullement limitatif la fabrication d'une électrode à deux couches pour pile à combustible. L'électrode comporte donc une couche d'arrêt et une couche catalytique.

On rappelle que la couche d'arrêt qui est conductrice assure le transfert électronique de la couche active au collecteur de la pile tout en permettant grâce à sa porosité, aux réactifs gazeux, par exemple l'hydrogène ou l'air, d'atteindre par diffusion ladite couche catalytique sous faible pression d'alimentation.

De plus grâce à son hydrophobie, la couche d'arrêt permet de localiser l'interface liquide-gaz au sein de la couche active.

En ce qui concerne maintenant la couche active ou catalytique, elle permet grâce à sa conductivité le transfert électronique des zones réactionnelles vers le collecteur, à travers la couche d'arrêt tout en assurant la diffusion ionique vers les zones réactionnelles ou à partir de ces dernières, ainsi que l'apport en réactifs et cela par suite de sa porosité notamment.

Bien entendu elle présente une activité catalytique vis-à-vis du processus électrochimique.

Pour la réalisation d'une bande selon l'invention, comme indiqué précédemment, le dispositif 2 déverse un premier mélange destiné à constituer la couche d'arrêt sur lequel le dispositif 9 déverse le second destiné à constituer la couche catalytique. Ces mélanges ont d'ailleurs été préparés conformément à ce qui précède. Il faut noter que la première couche se forme alors qu'un film d'eau la recouvre encore. A ce moment on déverse donc le deuxième mélange dont la composition est différente. Dans le cas d'une couche catalytique il pourra comporter de la poudre ou des fibres de carbone ou de graphite associées à un élément d'activation catalytique tel que le platine. Certains des éléments de la deuxième couche vont se mêler à la première couche dont la porosité est encore importante, et cela sans le détruire, ce qui permettra par la suite une cohésion améliorée entre les deux couches. En outre on remarque que la vitesse de filtration de l'eau à travers la première couche est suffisante pour que l'on puisse déposer une troisème couche sur la deuxième, et que l'ensemble puisse atteindre la section des presses 4 sans aucun support mécanique, et sans détérioration.

Les couches ainsi obtenues simultanément peuvent présenter de très faibles épaisseurs, de l'ordre de quelques micromètres, en outre elles se révèlent homogènes.

De telles électrodes bicouche peuvent être aisément intégrées dans des structures de piles à combustible du type filtre-press par exemple du type de celle décrite dans le document DE—B2—25 02 738, piles dans lesquelles la collection du courant peut être assurée au moyen de collecteurs à points ou à lignes distants entre eux de quelques millimètres, par exemple, par un collecteur gaufré bipolaire.

Généralement un tel collecteur peut être constitué de n'importe quelle matière conductrice, avantageusement d'une feuille de matière plastique chargée de fibres conductrices, notamment de fibres de carbone. Le contact entre le collecteur et l'électrode est assuré soit par pression, de préférence par soudure ou par collage au moyen d'une colle conductrice, de préférence une résine époxy chargée de carbone.

On à d'ailleurs constaté avec surprise qu'un tel mode de prélèvement de courant sur des électrodes telles que réalisées conformément au procédé selon l'invention et comportant un taux élevé de PTFE permet d'obtenir des densités de courant de l'ordre de 300 mA/cm² pour l'hydrogène et 200 mA/cm² pour l'air, ces fibres de carbone étant mutuellement en contact malgré leur très faible teneur.

On va maintenant préciser quelques caractéristiques d'électrodes obtenues en mettant en oeuvre le procédé selon l'invention.

### Exemple 1

La couche d'arrêt d'épaisseur 150 μm comporte 7 à 15% de fibres de carbone et 93 à 85% de PTFE. Sa porosité est de 30 à 60% et sa résistivité de 0,04 à 0,1 ohm.cm.

La couche catalytique présente une épaisseur de 20 μm et une composition de 60% de PTFE et 40% de carbone catalysé ou non.

On peut éventuellement prévoir une troisième couche poreuse, hydrophile jouant le rôle de membrane ou de piège à réactif chimique.

### Exemple 2

La couche d'arrêt présente une épaisseur de 77 μm et la couche catalytique une épaisseur de 23 μm. Sa teneur en platine est de 150 microgrammes/cm², sa résistivité de 0,38 ohm.cm et sa porosité de l'ordre de 50%.

### Exemple 3

La couche d'arrêt comporte 12% de fibres de carbone et 88% de PTFE, la couche catalytique comporte 60% de PTFE et 40% de carbone à 20% de platine.

Les épaisseurs relatives de ces couches sont de 200 et 50 μm respectivement.

On prévoit une troisième couche inerte, hydrophile comportant des fibres d'amiante. Son épaisseur est de 17 μm.

On notera que les couches catalytique et d'arrêt peuvent comporter de 20 à 99% de PTFE comme précédemment signalé.

### Revendications

1. Procédé de fabrication en continu de bandes minces poreuses conductrices comportant au moins deux couches à base de fibres en carbone, l'une des couches au moins comportant en plus un élément d'activation catalytique, caractérisé par le fait qu'on prépare une dispersion aqueuse très diluée de fibres de carbone, on ajoute à cette dispersion une émulsion aqueuse d'un liant, on initie la précipitation d'une partie dudit liant sur lesdites fibres, on étale ce mélange sous forme d'une première couche, on étale sur cette première couche au moins une deuxième couche obtenue comme la première couche, mais qui contient en plus un élément d'activation catalytique, on élimine au moins une partie de l'eau du mélange, on sèche, et on effectue la mise à l'épaisseur désirée de la bande entre deux rouleaux.

2. Procédé selon la revendication 1, caractérisé par le fait que lesdites couches comportent une proportion pondérale dudit liant comprise entre 20 et 99%.

3. Procédé selon l'une des revendications 1 et 2, caractérisé par le fait que la dispersion comporte sensiblement 1/1000 en poids de fibres.

4. Procédé selon l'une des revendications précédentes, caractérisé par le fait que ledit liant est choisi dans le groupe comportant le polytétrafluoréthylène et le chlorure de polyvinyle.

5. Procédé selon l'une des revendications 1 à 4, caractérisé par le fait que ladite émulsion de liant est au préalable diluée, la teneur en extrait sec étant après dilution de l'ordre de 5/1000 environ.

6. Procédé selon l'une des revendications 1 à 5, caractérisé par le fait que la précipitation d'au moins un partie du liant sur lesdites fibres est réalisée par agitation mécanique.

7. Procédé selon l'une des revendications 1 à 5, caractérisé par le fait que la précipitation d'au moins une partie du liant sur lesdites fibres est réalisée par addition de cations.

8. Procédé selon l'une des revendications 1 à 5, caractérisé par le fait que la précipitation d'au moins une partie du liant sur lesdites fibres est réalisée par chauffage à une température de l'ordre de 25 à 30°C sensiblement.

9. Procédé selon l'une des revendications 1 à 8, caractérisé par le fait que la porosité de la bande est ajustée à une valeur prédéterminée par réglage du débit dudit mélange et de la vitesse d'entraînement de la bande, sans utilisation de produits porophores.

10. Procédé selon l'une des revendications précédentes, caractérisé par le fait que ladite bande comporte en outre une troisième couche réalisée en une matière hydrophile.

11. Procédé selon la revendication 2, caractérisé en ce que la première couche comporte une proportion pondérale dudit liant comprise entre 70 et 95%.

12. Bande multicouche obtenue par la mise en oeuvre du procédé selon l'une des revendications 1 à 11.

**Patentansprüche**

1. Verfahren zur kontinuierlichen Herstellung von dünnen porösen leitenden Bändern, die mindestens zwei Schichten auf der Basis von Kohlenstoffasern aufweisen, wobei mindestens eine der Schichten außerdem ein Element zur katalytischen Aktivierung aufweist, dadurch gekennzeichnet, daß man eine sehr dünne wässrige Dispersion von Kohlenstoffasern vorbereitet, daß man dieser Dispersion eine wässrige Emulsion eines Bindemittels zufügt, daß man die Ausfällung eines Teils des Bindemittels auf die Fasern auslöst, daß man diese Mischung in Form einer ersten Schicht ausbreitet, daß man auf dieser Schicht mindestens eine zweite Schicht ausbreitet, die wie die erste Schicht hergestellt wurde, aber außerdem ein Element zur katalytischen Aktivierung aufweist, daß man mindestens einen Teil des Wassers aus der Mischung entfernt, daß man das Ganze trocknet, und daß man das Band zwischen zwei Rollen auf die gewünschte Dicke bringt.

2. Verfahren nach Anspruch 1, dadurch gekennzeichnet, daß die Schichten einen Gewichtsanteil des Bindemittels aufweisen, der zwischen 20 und 99% liegt.

3. Verfahren nach einem der Ansprüche 1 und 2, dadurch gekennzeichnet, daß die Dispersion etwa 1/1000 Gew.% Fasern aufweist.

4. Verfahren nach einem der vorstehenden Ansprüche, dadurch gekennzeichnet, daß das Bindemittel aus der Gruppe ausgewählt wird, die aus Polytetrafluoräthylen und Polyvinylchlorid besteht.

5. Verfahren nach einem der Ansprüche 1 bis 4, dadurch gekennzeichnet, daß die Bindemittelemulsion vorher gelöst wird, wobei der Gehalt an trockenem Extrakt nach der Auflösung etwa 5/1000 beträgt.

6. Verfahren nach einem der Ansprüche 1 bis 5, dadurch gekennzeichnet, daß die Ausfällung mindestens eines Teils des Bindemittels auf die Fasern durch mechanisches Bewegen erfolgt.

7. Verfahren nach einem der Ansprüche 1 bis 5, dadurch gekennzeichnet, daß die Ausfällung mindestens eines Teils des Bindemittels auf die Fasern durch Hinzufügen von Kationen erfolgt.

8. Verfahren nach einem der Ansprüche 1 bis 5, dadurch gekennzeichnet, daß die Ausfällung mindestens eines Teils des Bindemittels auf die Fasern durch Erhitzen auf eine Temperatur von im wesentlichen 25 bis 30°C geschieht.

9. Verfahren nach einem der Ansprüche 1 bis 8, dadurch gekennzeichnet, daß die Porosität des Bandes durch Festlegung des Durchsatzes der Mischung und der Antriebsgeschwindigkeit des Bandes auf einen vorbestimmten Wert eingestellt wird, d.h. ohne Verwendung von porenbildenden Produkten.

10. Verfahren nach einem der vorstehenden Ansprüche, dadurch gekennzeichnet, daß das Band außerdem eine dritte Schicht aus einem hydrophilen Material aufweist.

11. Verfahren nach Anspruch 2, dadurch gekennzeichnet, daß die erste Schicht einen Gewichtsanteil des Bindemittels von zwischen 70 und 95% aufweist.

12. Vielschichtiges Band, das durch die Anwendung des Verfahrens nach einem der Ansprüche 1 bis 11 erhalten wird.

## Claims

1. A method of continuously manufacturing thin porous conductive strips, comprising at least two layers base on carbon fibres, at least one of the layers further comprising an element for the catalytic activation, characterized in that a very dilute aqueous dispersion of carbon fibres is prepared, an aqueous binder emulsion is added to this dispersion, the precipitation of a part of said binder onto said fibres is initiated, said mixture is spread out in the form of a first layer, at least a second layer obtained like the first layer, but further containing an element for the catalytic activation, is spread onto this first layer, at least some of the water is removed from the mixture, it is dried, and the layer is set to the required thickness by passing bettween two rollers.

2. A method according to claim 1, characterized in that said layers include a proportion by weight of said binder which lies between 20 and 99%.

3. A method according to one of the claims 1 and 2, characterized in that the dispersion includes substantially 1/1000 by weight of fibres.

4. A method according to one of the preceding claims, characterized in that said binder is chosen from the group which includes polytetrafluorethylene and polyvinyl chloride.

5. A method according to one of the claims 1 to 4, characterized in that said binder emulsion is first diluted, so that its dry extract content is approximately 5/1000 after dilution.

6. A method according to one of the claims 1 to 5, characterized in that mechanical shaking is used to precipitate at least some of the binder on said fibres.

7. A method according to one of the claims 1 to 5, characterized in that cations are added to precipitate at least some of the binder on said fibres.

8. A method according to one of the claims 1 to 5, characterized in that at least some of the binder is precipitated on said fibres by heating to a temperature of substantially 25 to 30°C.

9. A method according to one of the claims 1 to 8, characterized in that the porosity of the strip is adjusted to a predetermined value by adjusting the flow rate of said mixture and the feed speed of the strip, without using pore-forming products.

10. A method according to one of the preceding claims, characterized in that said strip further comprises a third layer which is made of a hydrophilic substance.

11. A method according to claim 2, characterized in that the first layer comprises a proportion by weight of said binder comprised between 70 and 95%.

12. A multilayer-strip obtained by application of the method according to one of claims 1 to 11.

0028729